(19) Europäisches Patentamt
European Patent Office
Office européen des brevets

(11) Publication number: 0 472 783 A1

(12) # EUROPEAN PATENT APPLICATION

(21) Application number: 90202316.7

(51) Int. Cl.[5]: C07F 7/22, A61K 31/32

(22) Date of filing: 28.08.90

(43) Date of publication of application:
04.03.92 Bulletin 92/10

(84) Designated Contracting States:
AT BE CH DE DK ES FR GB GR IT LI LU NL SE

(71) Applicant: PHARMACHEMIE B.V.
Swensweg 5
NL-2031 GA Haarlem(NL)

(72) Inventor: Boualam, Mohammed, p/a Vrije Universiteit
Kamer 8G511, Pleinlaan 2
B-1050 Brussel(BE)
Inventor: Gielen, Marcel
Bos van Houthulstlaan 6
B-1970 Wezenbeek-Oppem(BE)
Inventor: Meriem, Abdelkader, p/a Vrije Universiteit
Kamer 8G519, Pleinlaan 2
B-1050 Brussel(BE)
Inventor: de Vos, Dirk
Hofbrouckerlaan 36
NL-2341 LP Oegstgeest(NL)
Inventor: Willem, Rudolph
H. Consciencestraat 7
B-1800 Vilvoorde(BE)

(74) Representative: Ellowicz, Leo et al
Octrooibureau Polak & Charlouis Laan Copes van Cattenburch 80
NL-2585 GD Den Haag(NL)

(54) **Anti-tumor compositions and compounds.**

(57) The invention relates to anti-tumor compositions containing one or more compounds of the formulae:

EP 0 472 783 A1

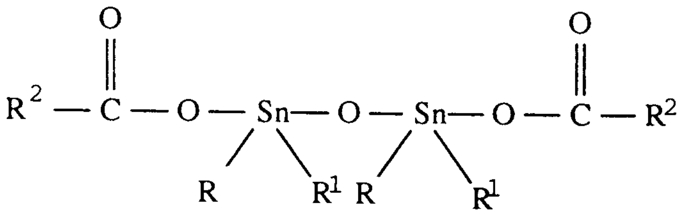

(1)

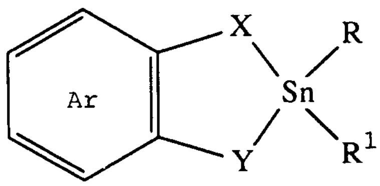

(2)

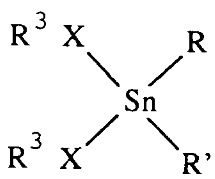

(3)

; and to said compounds of the formulae (1), (2), (3).

The invention relates to anti-tumor compositions and novel organotin compounds having anti-tumor activity.

In the treatment of human tumors metal compounds are used. Cisplatinum, cis-$(NH_3)_2PtCl_2$ - [D.Th.Sleyfer, S. Meyer and N.H. Mulder, Pharm. Weekblad Sci. Ed. 7 (1985), 237-244] and carboplatin

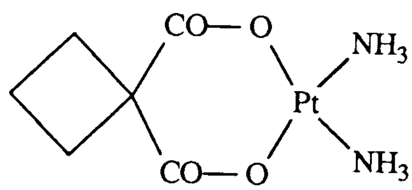

[R. Canetta, M. Rozencweig and S.A. Carter, Cancer Tr. Rev. 12 (1985) 125-136] are metal compounds which are commonly used against tumors.

Furthermore, a number of organotin compounds are known which have anti-tumor activities, for instance the following compounds

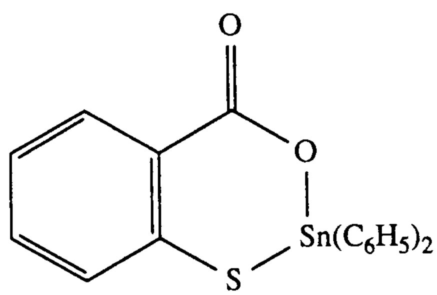

(23)

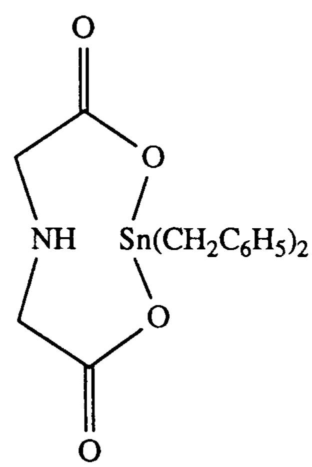

(24)

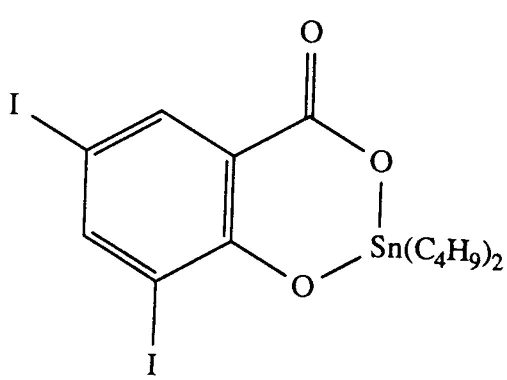

(25)

which are known from W. D. Honnick and J.J. Zuckermann, Inorg. Chem. 18 1979, 1437-1443, "The Synthesis of Tin (IV)-Oxygen and Sulfur Heterocycles and their transformation to Tin (II) Analogues"; A. Meriem, M. Gielen and R. Willem, Journal of Organometallic Chemistry, 365 (1989) 91-101, Synthesis, characterization and anti-tumor activity of a series of diorganotin (IV) derivatives of bis(carboxymethyl)-amines; and Gielen c.s. Journal of Organometallic Chemistry, 328 (1987) 61-70, Synthesis and characterization of ethylphenylstannylene derivatives of ethylene glycol, cytidine and 3,5-diiodosalicylic acid, respectively. The article by Honnick and Zuckermann does not diclose anti-tumor activity for the compounds mentioned therein; the di-iodo compounds from this article was demonstrated to have anti-tumor activity, as appeared from tests carried out by the applicant and discussed herein below.

This invention provides compositions have excellent anti-tumor activity. These compounds contain as an active ingredient one or more of the following compounds:

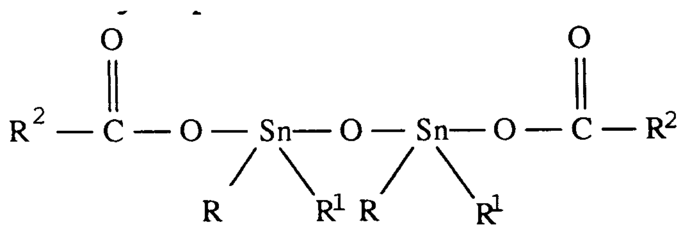

(1)

herein

R and $R^1$ are the same or different and represent $C_1$-$C_8$ alkyl groups,

$R^2$ is a phenyl group which is substituted with one ore more of the following groups: $C_1$-$C_3$ alkyl, $C_1$-$C_3$ alkoxy, hydroxy, halo, amino and acylamino;

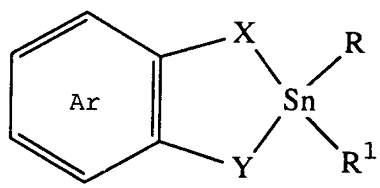

(2)

wherein:

R and $R^1$ are as defined for formula (1),

X and Y are independently - C(O)-O-, $-CH_2$-O-, -O-, -S- or $-CH_2$-C(O)-O-,

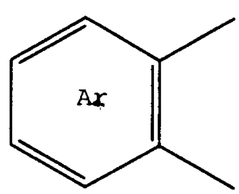

is a phenylene group or a pyridylene group with the N-atom in position 1, optionally substituted with one or more of the following groups: halo, $C_1$-$C_3$ alkyl and $C_1$-$C_3$ alkoxy, with the proviso that when

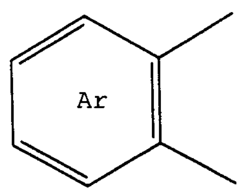

is a phenylene group substituted by two I atoms, and one of the groups X and Y is -C(O)-O-, the other is not -O-;

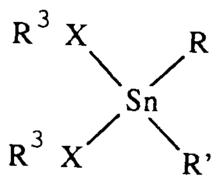

(3)

wherein:
R and $R^1$ are as defined for formula (1),
X is as defined for formula (2),
$R^3$ is a phenyl group, substituted with one or more of the following groups: hydroxy, $C_1$-$C_3$ alkoxy, trifluoromethyl, amino and $C_1$-$C_3$ alkylamino.

The invention also provides novel compounds having anti-tumor activity. These compounds have the formulae (1), (2) and (3), wherein the various symbols have the meanings stated above; with the proviso that when

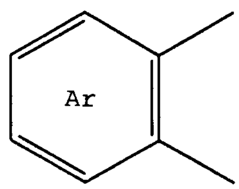

is an unsubstituted pyridylene group or phenylene group, X and Y cannot both be an -O- atom; and when

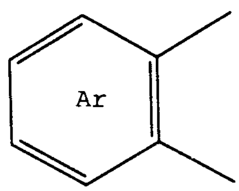

is a phenylene group and one of the groups X and Y is -C(O)-O-, the other is not -O- or -S-.

The above mentioned reference Inorganic Chemistry, Vol. 18, no. 6, 1979, "Synthesis of Tin IV Oxygen and -Sulfur Heterocycles and Their Transformation to Tin (II) Analogues" by W. D. Honnick and J.J.Zuckermann also discloses among others the following compounds

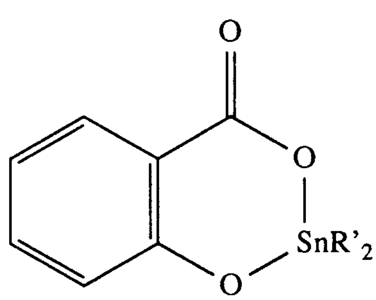

wherein R'=$CH_3$, n-$C_4H_9$ and $C_8H_{17}$

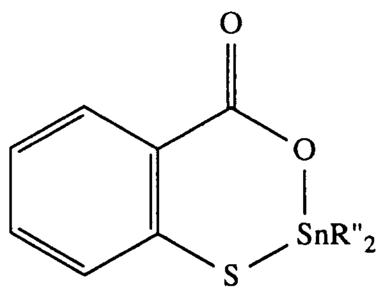

wherein R''=$CH_3$ and n-$C_4H_9$

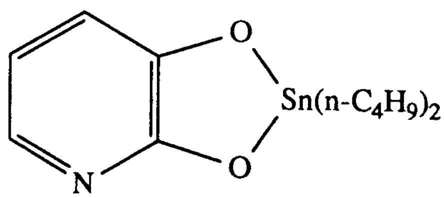

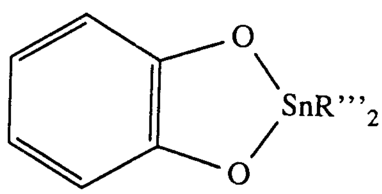

wherein R'''=$CH_3$,$C_2H_5$, n-$C_4H_9$ and n.$C_8H_{17}$

As mentioned above, this article does not disclose an anti tumor activity for any of the compounds described therein.

The present organotin compounds can be prepared as disclosed in the Preparation Examples given herein below.

A number of compounds, of which the preparation is described hereinafter, were tested in vitro against the following human tumor cell lines:

A 204 rhabdomyosarcoma (A cells)
MCF-7 mammary carcinoma (M cells)
T24 bladder carcinoma (T cells
WiDr colon tumor cells (W cells)
IgR-37 melanoma (Z cells).

Also tested were the known tin compounds of the formulae (23) and (24) and cisplatinum.

The tests were carried out according to the method of R.van Lambalgen en P. Lelieveld, The PIT method: an automated in vitro technique for drug toxicity testing. Invest. New Drug 5, 161-165 (1987).

| Compound of formula | | Preparation example |
|---|---|---|
| (4) | 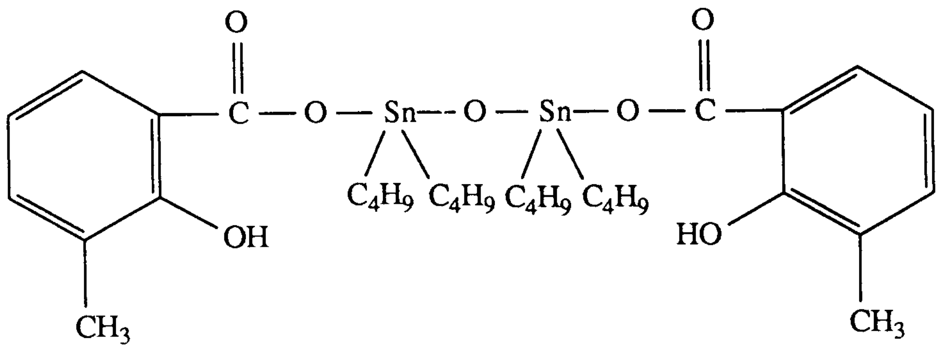 | I |

(5)

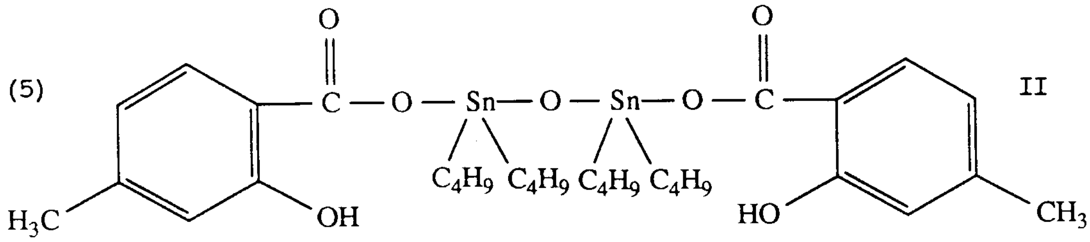

II

(6)

III

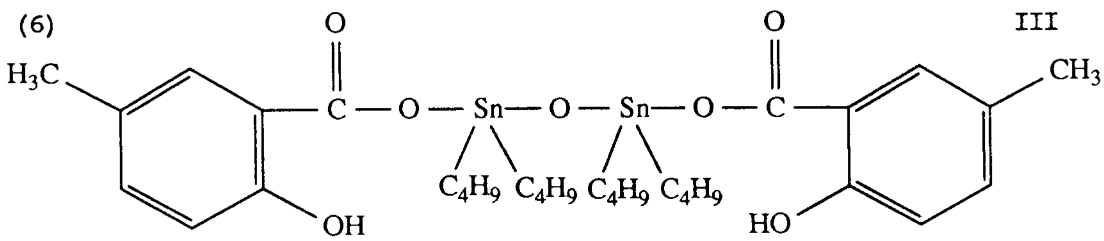

(7)

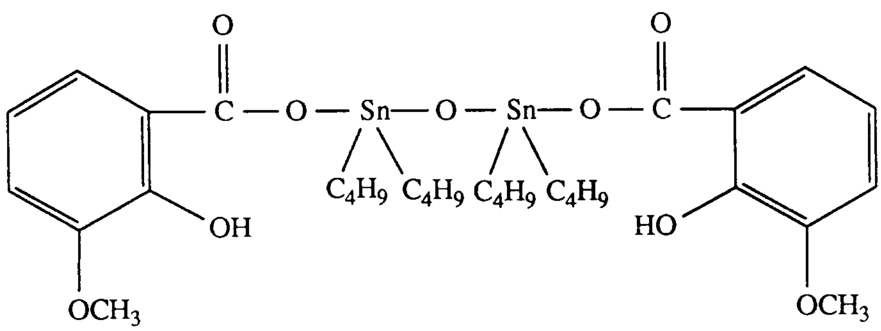

IV

(8)

V

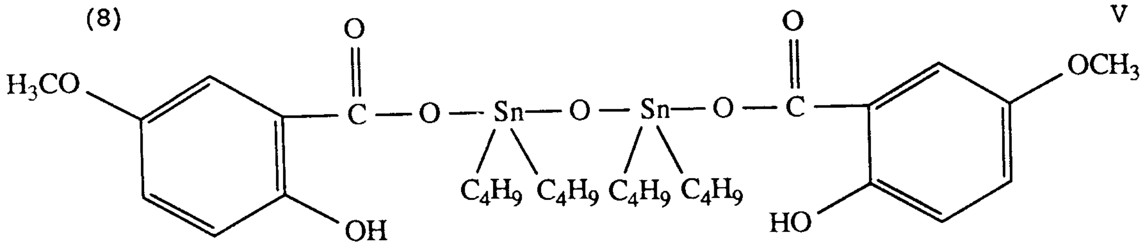

(9)

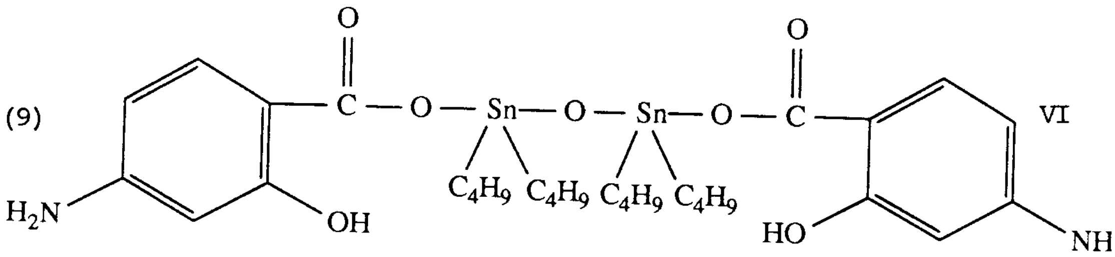

VI

(10)

VII

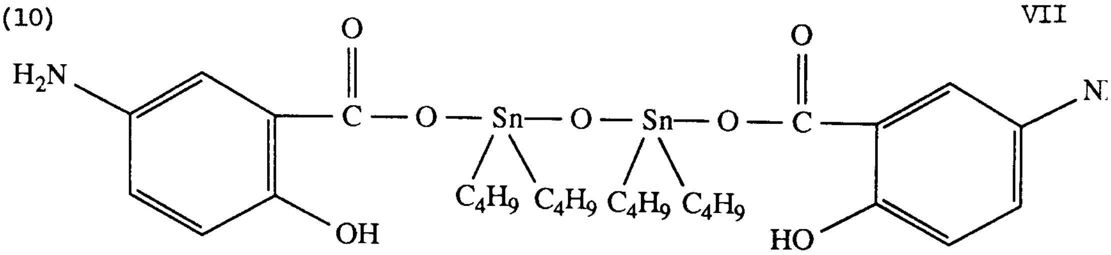

(11)

VIII

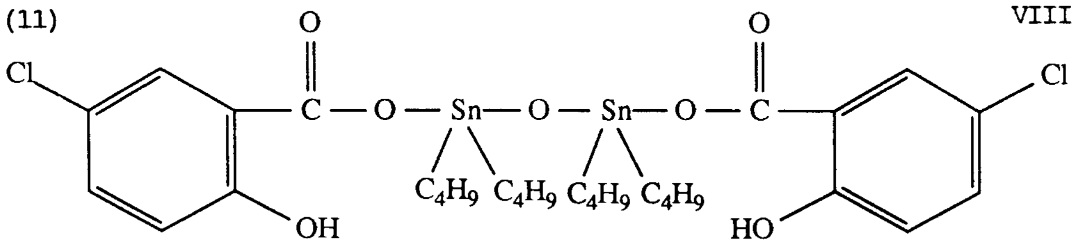

(12)

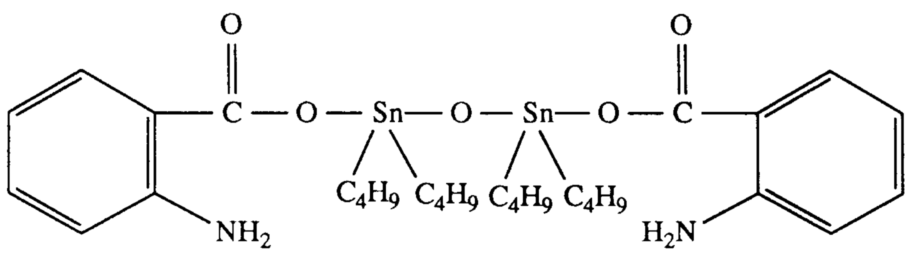

IX

(13)

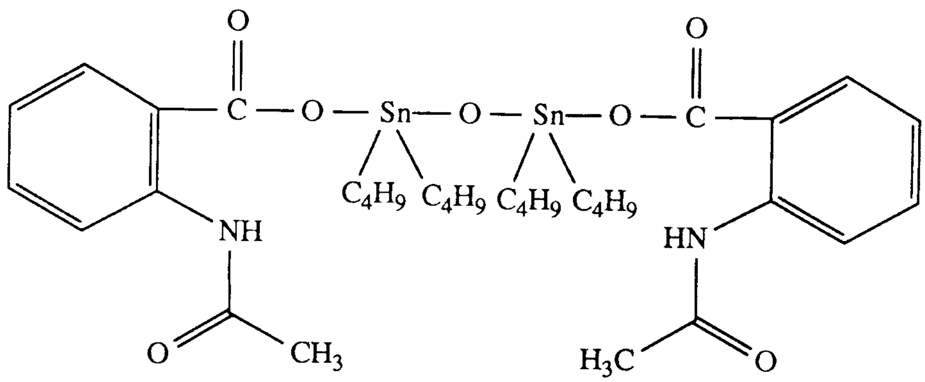

X

(14)

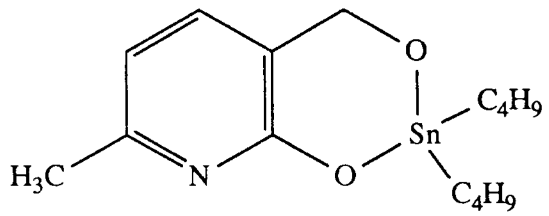

XI

(15)

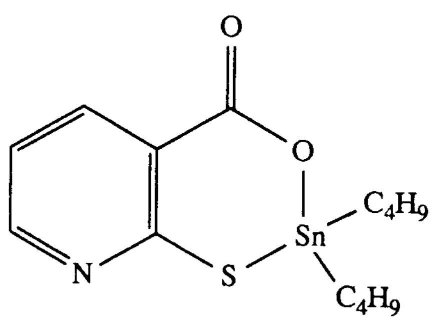

XII

(16)

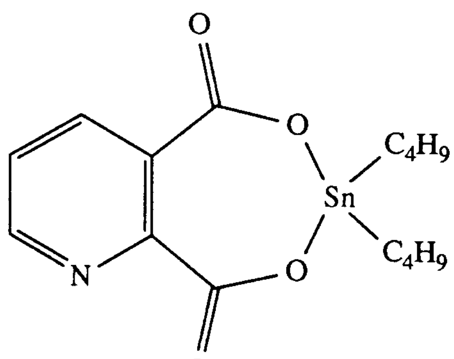

XIII

(17) 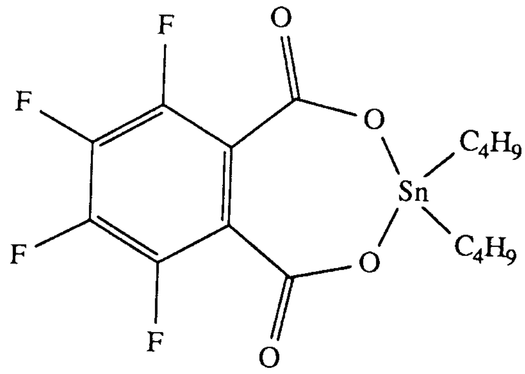 XIV

(18) 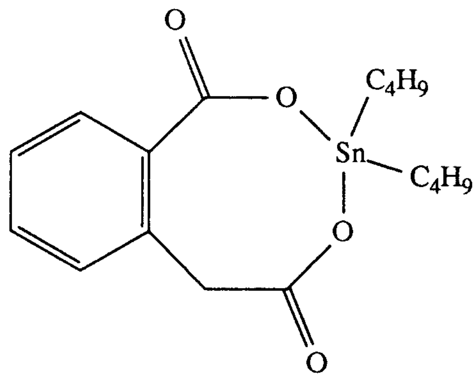 XV

(19) 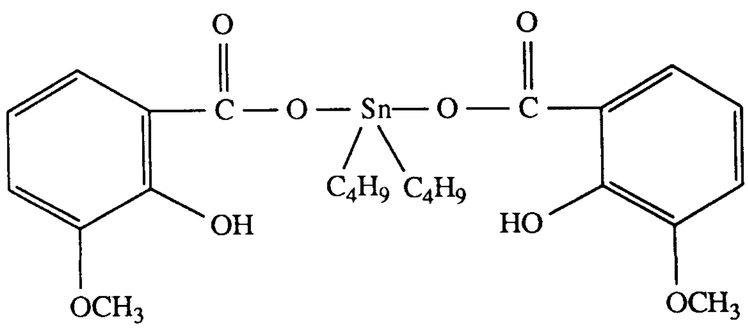 XVI

(20) 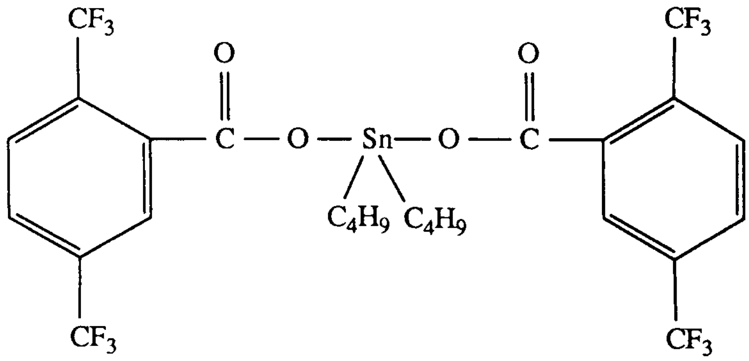 XVII

(21) 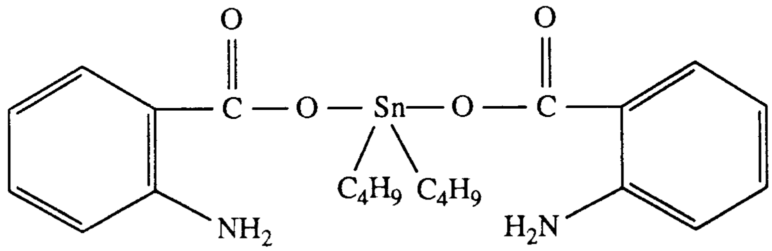 XVIII

(22) 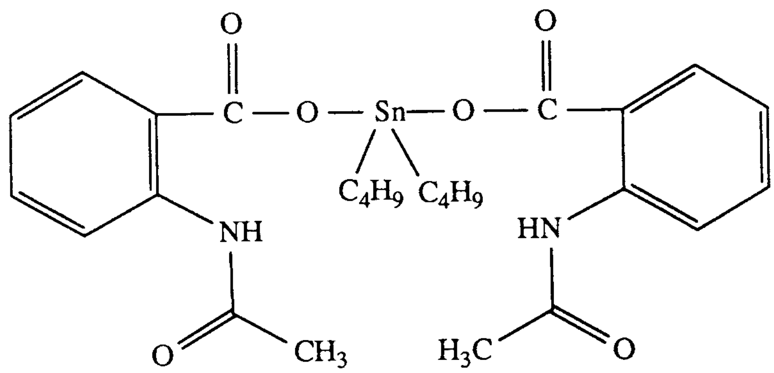 XIX

Furthermore the known compounds (23) and (24) were tested for comparative purposes.

The $ID_{50}$ values in ng/ml for the above compounds were determined according to the above mentioned procedure of van Lambalgen and Lelieveld. The $ID_{50}$ value is the amount which inhibits 50% of the cell growth.

ID50 values in ng/ml

| Compound of formula | A 204 | MCF-7 | T24 | WiDr | IgR-37 |
|---|---|---|---|---|---|
| (4) | 97 | 44 | 86 | 330 | 675 |
| (5) | 105 | 51 | 84 | 316 | 667 |
| (6) | | 90 | | 337 | |
| (7) | | 45 | | 323 | |
| (8) | 69 | 29 | 46 | 122 | 547 |
| (9) | 105 | 42 | 70 | 330 | 642 |
| (10) | | 38 | | 316 | |
| (11) | | 31 | | 280 | |
| (12) | | 121 | | 356 | |
| (13) | | 102 | | 444 | |
| (14) | 80 | 37 | 43 | 212 | 530 |
| (15) | | 23 | | 430 | |
| (16) | | 106 | | 235 | |
| (17) | | 51 | | 68 | |
| (18) | | 128 | | 464 | |
| (19) | | 105 | | 474 | |
| (20) | | 48 | | 176 | |
| (21) | 93 | 60 | 96 | 259 | 653 |
| (22) | | 125 | | 507 | |
| (23) | | 585 | | 15800 | |
| (24) | | 813 | | 4770 | |
| cis platium | 871 | 850 | 268 | 624 | 878 |

From the above results it can be seen that the present organotin compounds exhibit $ID_{50}$ values which compare favourably to a number of known organotin compounds and also to the commonly used cisplatinum.

Preparation example I

Equimolar amounts of 3-methylsalicylic acid and di-n-butyltin oxide are added to a 72/28 toluene/ethanol mixture and the ternary azeotrope ethanol/water/toluene is distilled off with a Dean-Stark mounting. Thereafter the solvent is evaporated under reduced pressure. The oil is crystallized from methanol/DMSO; yield: 69% of white crystals, mpt. 94-96 ° C.
Purity: one spot on TLC (support: $SiO_2$ with $UV_{254}$ fluorescence indicator
Polygram; eluant:toluene/acetic acid 6/4): $R_f$ = 0.80
characterisation: $^1$H NMR (in $CDCl_3$, reference: TMS internal standard): chemical shift $\delta$ (multiplicity: b = broad, d = doublet, dd = doublet of doublets, dt = doublet of triplets, qua = quartet, qui = quintet, m = complex pattern, s = singlet, se = sextet, t = triplet): 0.806 ppm (t), 1.264-1.413 (m), 1.413-1.716(m), 7.620 (d), 6.823 (bt), 7.310 (bd), 2.298(s), $^{13}$C NMR($CDCl_3$, reference: TMS, internal): 13.52 ppm, 26.75, 27.37, 27.79, 175.50, 130.69, 120.18, 117.75, 146.59, 161.86, 112.25, 21.80; $^{119}$Sn NMR($CDCl_3$, reference: tetramethyltin, external: 202.3 ppm, -190.3 ppm: Mössbauer spectrometry: quadropole splitting QS = 3.38 mm/s, isomer shift IS = 1.32 mm/s, source: Ca. $^{119}SnO_3$; mass spectrometry (El. 70 eV): e.g. [$MeC_6H_3$(O)-

$COO)]_2Sn_2Bu_3^+$ (7%); $MeC_6H_3(O)COOSnBu_2H^+$ (36); $MeC_6H_3(O)COOSnBu_2^{+\bullet}$ (66, molecular ion); $MeC_6H_3(O)COOSnH^+$ (91); $MeC_6H_3OSnH^+$ (27); $MeC_6H_3OSn^+$ (100, base peak); $BuSn^+$ (13); $SnOH^+$ (32); $SnH^+$ (14); $Sn^{+\bullet}$ (24).

Preparation example II

Equimolar amounts of 4-methylsalicylic acid and di-n-butyltin oxide are added to a 72/28 toluene/ethanol mixture and the ternary azeotrope ethanol/water/toluene is distilled of with a Dean-Stark mounting. Thereafter the solvent is evaporated under reduced pressure. The oil is crystallized from methanol/chloroform; yield: 81% of white crystals, mpt.: 173-175 °C.
Purity: one spot on TLC (support: $SiO_2$; eluant: toluene/acetic acid 6/4): $R_f = 0.71$
Characterization: $^1H$ NMR ($CDCl_3$): 0.794 (t), 0.873 (t), 1.262-1.401 (m), 1.401-1.704 (m), 7.640 (d), 6.790 (d), 2.373 (s), 6.823 (s); $^{13}C$ NMR ($CDCl_3$): 13.51, 26.76, 27.37, 27.79, 172.20, 136.03, 128.37, 126.58, 118.18, 160.31, 114.18, 15.73; Mössbauer spectrometry: QS = 3.78, IS = 1.40; mass spectrometry: e.g. $[MeC_6H_3(O)COO)]_2Sn_2Bu_3^+$ (33%); $MeC_6H_3(O)COOSnBu_2^+H$ (100, base peak); $MeC_6H_3(O)COOSnH^+$ (80); $MeC_6H_3OSnH^+$ (80); $MeC_6H_3OSn^+$ (97); $BuSn^+$ (22); $SnH^+$ (16); $Sn^{+\bullet}$ (15)

Preparation example III

Equimolar amounts of 5-methylsalicylic acid and di-n-butyltin oxide are added to a 72/28 toluene/ethanol mixture and the ternary azeotrope ethanol/water/toluene is distilled off with a Dean-Stark mounting. Thereafter the solvent is evaporated under reduced pressure. The oil is crystallized from hexane-chloroform; yield: 72% of white crystals, mpt.: 173-175 °C.
Purity: one spot on TLC (support: $SiO_2$:eluant:toluene/acetic acid 6/4): $R_f = 0.69$
Characterization: $^1H$ NMR($CDCl_3$): 0.894 (t), 0.963 (t), 1.371-1.471 (m), 1.471-1.957 (m), 7.577 (s), 2.422 (s), 7.260 (d), 6.905 (d); $^{13}C$ NMR ($CDCl_3$): 13.47, 13.49, 26.75, 27.37, 27.79, 175.64, 130.60, 127.90, 136.19, 117.33, 159.77, 114.44, 20.37; $^{119}Sn$ NMR($CDCl_3$):-198.8, -192.6; Mössbauer spetrometry: QS = 3.32, IS = 1.29; mass spectrometry: $MeC_6H_3(O)COOSnBu_2H^+$ (16); $MeC_6H_3(O)COOSnBu_2^{+\bullet}$ (100, base peak, molecular ion); $MeC_6H_3(O)COOSnH^+$ (41); $MeC_6H_3OSn^+$ (42); $BuSn^+$ (7); $SnOH^+$ (17); $Sn^{+\bullet}$ (9).

Preparation example IV

Equimolar amounts of 3-methoxysalicylic acid and di-n-butyltin oxide are added to a 72/28 toluene/ethanol mixture and the ternary azeotrope ethanol/water/toluene is distilled off with a Dean-Stark mounting. Thereafter the solvent is evaporated under reduced pressure. The oil is crystallized from hexane-chloroform; yield: 88% of white crystals, mpt.: 87-80 °C.
Purity: one spot on TLC (support: $SiO_2$; eluant: toluene/acetic acid 6/4): $R_f = 0.78$
Characterization: $^1H$ NMR ($CDCl_3$): 0.796 (t), 0.861 (t), 1.363 (m), 1.542-1.970 (m), 7.453 (d), 6.784-6.875 (m), 7.052 (d), 3.923 (s), $^{13}C$ NMR($CDCl_3$): 13.46, 26.70, 27.32, 27.73, 175.66, 116.47, 118.18, 122.11, 148.83, 115.09, 56.31; $^{119}Sn$ NMR($CDCl_3$): -187.4, -253.3, -233,9, -253,3: Mössbauer spectrometry: QS = 3.44, IS = 1.29;mass spectrometry: e.g. $MeOC_6H_3(O)COOSnBu_2H^+$ (11); $MeOC_6H_3(O)COOSnBu_2^{+\bullet}$ (100, base peak, molecular ion); $MeOC_6H_3(O)COOSnH^+$ (72); $MeOC_6H_3OSn^+$ (81); $SnOH^+$ (32); $SnH^+$ (20); $Sn^{+\bullet}$ (17)

Preparation example V

Equimolar amounts of 5-methoxy salicylic acid and di-n-butyltin oxide are added to a 72/28 toluene/ethanol mixture and the ternary azeotrope ethanol/water/toluene is distilled off with a Dean-Stark mounting. Thereafter the solvent is evaporated under reduced pressure. The oil is crystallized from hexane-methanol; yield: 73% of white crystals, mpt.: 78-80 °C.
Purity: one spot on TLC (support: $SiO_2$; eluant: toluene/acetic acid 6/4): $R_f = 0.80$.
Characterization: $^1H$ NMR ($CDCl_3$): 0.822 (t), 0.874 (t), 1.176-1.385 (m), 1.385-1.560 (m), 7.283 (bd), 3.810 (s), 7.079 (dd), 6.920 (d); $^{13}C$ NMR ($CDCl_3$): 13.52, 26.75, 27.40, 27.78, 175.49, 113.80, 152.08, 122.89, 118.33, 156.18, 114.66, 55.96; $^{119}Sn$ NMR($CDCl_3$): -195.0, -198.0; Mössbauer spectrometry: QS = 3.40, IS = 1.32; mass spectrometry: e.g. $MeOC_{63}(O)COOSnBu_2H^+$ (100, base peak); $MeOC_6H_3(O)COOSnH^+$ (58); $MeOC_6H_3OSn^+$ (72); $BuSn^+$ (18); $SnOH^+$ (27); $SnH^+$ (18); $Sn^{+\bullet}$ (7).

Preparation example VI

Equimolar amounts of 4-amino salicylic acid and di-n-dibutyltin oxide are added to a 72/28 toluene/ethanol mixture and the ternary azeotrope ethanol/water/toluene is distilled off with a Dean-Stark mounting. Thereafter the solvent is evaporated under reduced pressure; yield: 91% of a white powder, mpt.: >350 ° C.
Purity: was not determined by TLC because this compound does not dissolve in any volatile solvent.
Characterization: $^1$H NMR($d_6$-DMSO/$D_2$O): 0.800 (2 bt), 1.263-1.340 (m), 1.340-1.480 (m), 1.480-1.740 (m), 7.446 (d), 6.075 (d), 3.545 (s), 5.977 (s); $^{13}$C NMR ($d_6$-DMSO): 13.27, 13.38, 25.72, 26.29, 26.49, 26.63, 26.82, 26.98, 131,87, 154.70, 105.70, 98.81, 102.89, 162.67, 174.55; $^{119}$Sn NMR ($CDCl_3$): -245.6; Mössbauer spectrometry: QS = 3.09, IS = 1.22; mass spectrometry: e.g. $[H_2NC_6H_3(O)COO)]_2Sn_2Bu_3^+$ (4%); $H_2NC_6H_3$-(O)$COOSnBu_2H^+$ (67); $H_2NC_6H_3(O)COOSnH^+$(31); $H_2NC_6H_3OSnH^+$ (31); $H_2NC_6H_3OSn^+$ (100, base peak); $BuSn^+$ (16); $SnOH^+$ (15); $SnH^+$ (12); $Sn^{+\bullet}$(7).

Preparation example VII

Equimolar amounts of 5-amino salicylic acid and di-n-butyltin oxide are added to a 72/28 toluene/ethanol mixture and the ternary azeotrope ethanol/water/toluene is distilled off with a Dean-Stark mounting. Thereafter the solvent is evaporated under reduced pressure; yield: 79% of a white powder, mpt.: 105-107 ° C. After recrystallization from toluene crystals having a melting point >350 ° C are obtained. Purity: was not determined by TLC because this compound does not react with acetic acid on the support.
Characterization: $^1$H NMR ($CDCl_3$): 0.810 (t), 0.887 (t), 1.263-1.454 (m), 1.668-1.758 (m), 7.047 (s), 3.5 (bs), 6.660 (dd), 6.618 (d); $^{13}$C NMR ($CDCl_3$): 13.43, 13.52; 26.71, 27.36, 27.82, 115.67, 123.88, 138.44, 118.12, 114.83, 154.86, 175.33; $^{119}$Sn NMR($CDCl_3$): -235.5; Mössbauer spectrometry: QS = 3.19, IS = 1.27; mass spectrometry: e.g. $H_2NC_6H_3(O)COOSnBu_2H^+$ (5); $H_2NC_6H_3(O)COOSnBu_2^{+\bullet}$ (100, molecular ion, base peak); $H_2NC_6H_3(O)COOSnH^+$ (13); $H_2NC_6H_3(O)COOSnH^+$ (61); $H_2NC_6H_3OSnH^+$ (14); $H_2NC_6H_3OSn^+$ (54); $BuSnH_2^+$ (5); $SnOH^+$ (7); (6); $Sn^{+\bullet}$(7).

Preparation example VIII

Equimolar amounts of 5-chlorosalicylic acid and di-n-butyltin oxide are added to a 80/20 toluene/ethanol mixture and the ternary azeotrope ethanol/water/toluene is distilled off with a Dean-Stark mounting. Thereafter the solvent is evaporated under reduced pressure. The brown oil is crystallized from petroleum ether; yield: 74% of white crystals, mpt.: 133-135 ° C.
Purity: one spot on TLC (support: $SiO_2$; eluant: toluene/acetic acid 6/4): $R_f$ = 0.82
Characterization: $^1$H NMR ($CDCl_3$): 0.826 (t), 0.894 (t), 1.458-1.738 (m), 1.379 (qui), 7.765 (s), 7.420 (dd), 6.955 (d); $^{13}$C NMR($CDCl_3$): 13.57; 26.79; 27.36; 27.79; 174.40; 115.63; 160.28; 123.80; 119.16; 135.25; 130.00; $^{119}$Sn NMR($CDCl_3$): -185.77; -194.99.

Preparation example IX

Equimolar amounts of ortho-aminobenzoic acid and di-n-butyltin oxide are kept in a boiling 80/20 benzene/ethanol mixture for 5 hours. The solvent is evaporated under reduced pressure. The obtained oil is crystallized from hexane/methylene chloride; yield: 81% of white crystals, mpt.: 135-136 ° C.
Purity: one spot on TLC (support: $SiO_2$; eluant: cyclohexane/dioxan 99/1): $R_f$ = 0.73
Characterization: $^1$H NMR: 5.759 (b) 7.838 (d), 7.242 (t), 6.667 (dt), 1.695 (m), 1.357 (se), 0.798 (t); $^{13}$C NMR: 174.7; 150.5; 114.2; 133.4; 132.4; 116.6; 116.8; 26.87; 27.47; 26.79; 13.55; 13.50 $^{119}$Sn NMR: -205.9; -216.4; Mössbauer spectrometry: QS = 3.34,IS = 1.29

Preparation example X

Equimolar amounts of ortho-N-acetylamino benzoic acid and di-n-butyltin oxide were kept in a boiling benzene/ethanol 80/20 mixture for 5 hours. The solvent is evaporated under reduced pressure. The obtained oil is crystallized from methylene chloride/hexane; yield 36% of white crystals, mpt.: 141-145 ° C.
Purity: one spot on TLC (support: $SiO_2$; eluant:cyclohexane/dioxan 99/1): $R_f$ = 0.67
Characterization: $^1$H NMR: 11.28 (b), 2.228 (s), 8.711 (d), 7.954 (bs), 7.539 (t), 7.096 (t), 0.886 (m), 1.374 (m), 1.724 (m); $^{13}$C NMR: 168.8; 175.0; 25.6; 141.6; 116.2; 134.2; 131.4; 122.3; 120.5; 27.9; 27.6; 26.9; 26.8; 13.7; $^{119}$Sn NMR: -189.0; -200.0.

Preparation example XI

Equimolar amounts of 6-methyl-2-hydroxymethyl-3-hydroxypyridine and di-n-butyltin oxide were kept in boiling toluene/ethanol 80/20 for 4 hours and the ternary azeotrope ethanol/water/toluene is distilled of with a Dean-Stark mounting. Thereafter half of the solvent is evaporated under reduced pressure and the obtained solution is left in a refrigerator for one night. The obtained solid is washed with petroleum ether and recrystallized from chloroform; yield: 86% of white crystals, mpt.: 220 ° C (decomposition).
Purity: one spot on TLC (support: $SiO_2$; eluant: toluene/acetic acid 6/4):$R_f = 0.74$.
Characterization: $^1$H NMR ($CDCl_3$): 0.881 (t), 1.355 (se), 1.431-1.597 (m), 1.599-1.693 (m), 4.890 (s), 6.971 (d), 6.941 (d), 2.398 (s); $^{13}$C NMR ($CDCl_3$): 13.53, 26.82, 27.11, 23.14, 68.72, 145.73, 147.59, 124.04, 127.35, 155.72, 22.02; $^m$ass spectrometry: e.g. $CH_3C_5NH_2(O)CH_2OSnBu_2H^+$ (17); $CH_3C_5NH_2(O)CH_2OSnBu_2^{+\bullet}$ - (100, molecular ion, base peak); $CH_3C_5NH_2$-$(O)CH_2OSnBu^+$ (9); $CH_3C_5NH_2(O)CH_2OSnH^+$ (81); $CH_3C_5NH_2OSn^+$ (86); $BuSn^+$ (13); $SnOH^+$ (21); $SnH^+$ (27); $Sn^{+\bullet}$(19).

Preparation example XII

Equimolar amounts of 3-aza-2-thiosalicylic acid and di-n-butyltin oxide are kept in boiling benzene for 20 hours. Thereafter half of the solvent is distilled with a Dean-Stark mounting. The obtained liquid is cooled and filtrated. The so obtained solution is evaporated under vacuum and the obtained solid is crystallized from chloroform; yield: 90% of white crystals, mpt.: 275-277 ° .
The purity could not be determined with TLC (decomposition on the TLC plate).
Characterization: $^1$H NMR ($CDCl_3$): 0.879 (t), 1.408 (se), 1.634-1.886 (m), 7.956 (dd), 7.116 (dd), 8.455 (dd), $^{13}$C NMR: 13.53, 26.55; 27.87; 22.23; 168.30; 168.33; 142.0; 118.91; 147.09; 126.62; Mössbauer spectrometry: QS = 2.96, IS = 1.39; mass spectrometry: e.g. $C_5NH_3(S)COOSnBu_2H^+$ (2); $C_5NH_3(S)COOSnBu_2^{+\bullet}$ (7, molecular ion); $C_5NH_3(S)COOSnBuH^+$(15);$C_5NH_3(S)COOSnH^+$ (100, base peak); $C_5NH_3(S)SnBu^+$ (5); $SnOH^+$ (16); $SnH^+$ (9); $Sn^{+\bullet}$(17).

Preparation example XIII

Equimolar amounts of 2.3 pyridine carboxylic acid and di-n-butyltin oxide were kept in boiling chloroform for 6 hours. Thereafter the solvent is evaporated under reduced pressure. The obtained solid is recrystallized from chloroform/acetone; yield 84% of white crystals, mpt.: 161-163 ° C.
Purity: one spot on TLC (support: $SiO_2$; eluant: toluene/acetic acid 6/4): $R_f = 0.79$.
Characterization: $^1$H NMR ($CDCl_3$): 0.786 (t), 1.163-1.703 (m), 7.726-7.771 (m), 8.132 (bs), 9.136 (bs); Mössbauer spectrometry: QS = 3.93, IS = 1.43.

Preparation example XIV

Equimolar amounts of tetrafluorophthalic acid and di-n-butyltin oxide are kept in a boiling benzene/ethanol 80/20 mixture for 24 hours. The solvent is evaporated under reduced pressure. The obtained white solid is recrystallized from methanol; yield: 85% of white crystals, mpt.: 210-215 ° C.
Purity: was not determined by TLC because this compound does not dissolve in a volatile solvent.
Characterization: $^1$H NMR ($d_6$-DMSO): 1.651 (m), 1.322 (se), 0.969 (t); Mössbauer spectrometry: QS = 3.43, IS = 1.43

Preparation example XV

Equimolar amounts of o.hydroxycarbonyl methyl benzoic acid and di-n-butyltin oxide are added to a 72/28 toluene/ethanol mixture and the ternary azeotrope ethanol/water/toluene is distilled off with a Dean-Stark mounting. Thereafter the solvent is evaporated under reduced pressure. The oil is crystallized from acetone/hexane; yield: 65% of white crystals, mpt.: 120-121 ° C.
Purity: one spot on TLC (support: $SiO_2$; eluant: petroleum ether/acetone/acetic acid 40/4/1): $R_f = 0.20$.
Characterization: $^1$H NMR ($CDCl_3$): 0.842 (t), 1.329 (se), 1.55-1.71 (m), 4.146 (s), 8.154 (dd), 6.790 (d), 7.471 (td), 7.336 (d), 7.297 (t).

Preparation example XVI

0.04 mole of 3-methoxysalicylic acid, dissolved in 250 ml toluene/ethanol 80/20, to which 0.02 mole di-n-butyltin oxide had been added, is boiled for 6 hours. The solvent is distilled off. The obtained oil crystallizes in the refrigerator after 24 hours and is washed several times with petroleum ether and

recrystallized from ethanol/petroleum ether 70/30; yield: 90% of white cyrstals, mpt.: 108-110 ° C.
Purity: one spot on TLC (support: $SiO_2$; eluant: cyclohexane/dioxan 99/1): $R_f = 0.79$.
Characterization: $^1H$ NMR ($CDCl_3$): 10.86 (b); 7.609 (dd); 7.084 (dd); 6.875 (t); 0.893 (t); 1.405 (se); 1.79-1.67 (m); 2.03-1.85 (m); 3.923 (s).

Preparation example XVII

Equimolar amounts of 2,5-bis(trifluoromethyl)benzoic acid and di-n-butyltin oxide are kept in a boiling benzene/ethanol 80/20 mixture for 5 hours. The solvent is evaporated under reduced pressure. The obtained white oil is crystallized from petroleum ether, yield: 82% of white crystals, mpt.: 48-50 ° C.
Purity: one spot on TLC (support: $SiO_2$; eluant: cyclohexane/dioxan 99/1): $R_f = 0.69$.
Characterization: $^1H$ NMR ($CDCl_3$): 8.214 (s), 7.942 (d); 7.896 (d); 1.988 (t), 1.850 (qui), 1.491 (se), 0.963 (t); $^{13}C$ NMR: 175.2; 128.9; 128.5; 134.9; 133.0; 133.3; 123.7; 123.5; 13.9; 26.6; 27.3; 27.1; $^{119}Sn$ NMR: -125,0; Mössbauer spectrometry: QS = 3.91,IS = 1.61.

Preparation example XVIII

Two moles of ortho-aminobenzoic acid and one mole of di-n-butyltin oxide are kept in a boiling benzene/ethanol 80/20 mixture for 7 hours. The solvent is evaporated under reduced pressure. The obtained oil is crystallized from ethanol; yield: 70% of white crystals, mpt.: 114-115 ° C.
Purity: one spot on TLC (support: $SiO_2$; eluant: cyclohexane/dioxan 99/1): $R_f = 0.69$.
Characterization: $^1H$ NMR ($CDCl_3$): 5.63 (b), 8.015 (d), 7.250 (td), 6.663 (td), 0.881 (t), 1.75 (m), 1,367 (t); $^{13}C$ NMR: 178.0, 116.0; 117.2,135.1, 135.5, 111.8, 151.3, 26.2, 26.9, 17.4, 14.2; $^{119}Sn$ NMR:-150.0; Mössbauer spectrometry: QS = 3.51, IS = 1.42; X-ray diffraction analysis.

Preparation example XIX

Two moles of ortho-N-methylamino benzoic acid and one mole of di-n-butyltin oxide are kept in a boiling benzene/ethanol 80/20 mixture for 7 hours. The solvent is evaporated under reduced pressure. The obtained oil is crystallized from methylene chloride/petroleum ether; yield: 88% of white crystals, mpt.: 69-71 ° C.
Purity: one spot on TLC (support: $SiO_2$; eluant: cyclohexane/dioxan 99/1): $R_f = 0.74$.
Characterization: $^1H$ NMR ($d_6$-DMSO): 3.4 (b), 2.811 (s), 6.545 (t), 6.641 (d), 7.341 (t), 7.815 (d), 1.48 (m), 1.250 (se), 0.766 (t); $^{13}C$ NMR: 177.6, 29.6, 110.6, 114.5, 133.5, 135.0, 150.7, 110.4, 25.5, 26.7, 26.3, 13.5; $^{119}Sn$ NMR: -150,5; Mössbauer spectrometry: QS = 3.71, IS = 1.31.

**Claims**

**1.** Anti-tumor compositions, containing as an active ingredient one or more of the following compounds

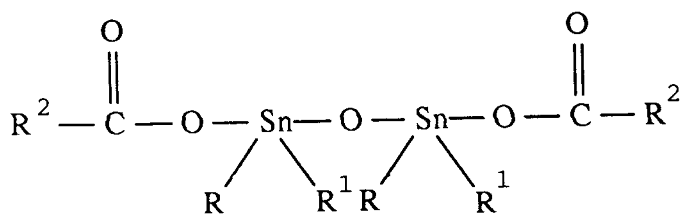

(1)

wherein R and $R^1$ are the same or different and represent $C_1$-$C_8$ alkyl groups,
$R^2$ is a phenyl group which is substituted with one ore more of the following groups: $C_1$-$C_3$ alkyl, $C_1$-$C_3$ alkoxy, hydroxy, halo, amino and acylamino;

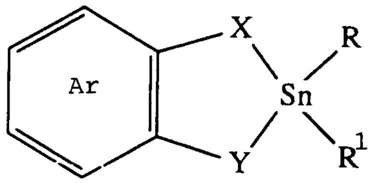

(2)

wherein:
R and $R^1$ are as defined for formula (1),
X and Y are independently -C(O)-O-, $-CH_2-O-$, -O-, -S- or $-CH_2C(O)-O-$,

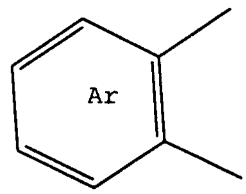

is a phenylene group or a pyridylene group with the N-atom in position 1, optionally substituted with one or more of the following groups: halo, $C_1$-$C_3$ alkyl and $C_1$-$C_3$ alkoxy,
with the proviso that when

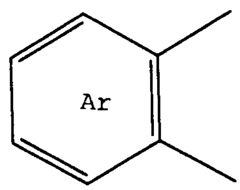

is a phenylene group substituted by two I atoms and one of the groups X and Y is -C(O)-O-, the other is not -O-;

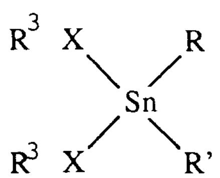

(3)

wherein:
R and $R^1$ are as defined for formule (1),
X is as defined for formula (2),
$R^3$ is a phenyl group, substituted with one or more of the following groups: hydroxy, $C_1$-$C_3$ alkoxy, trifluoromethyl, amino and $C_1$-$C_3$ alkylamino.

**2.** Compounds of the formulae (1), (2) and (3), wherein R, $R^1$, $R^2$, $R^3$, X, Y and

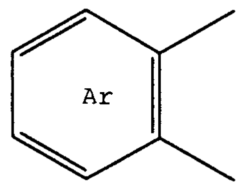

have the meanings stated in claim 1, with the proviso that when

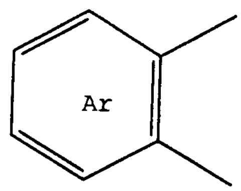

is an unsubstituted pyridyl group or phenylene group, X and Y cannot both be an -O-atom; and when

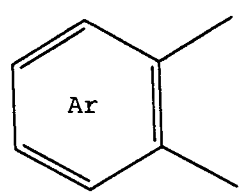

is a phenylene group and one of the groups X and Y is -C(O)-O-, the other is not -O- or -S-.

3. A compound according to claim 2, having the formula:

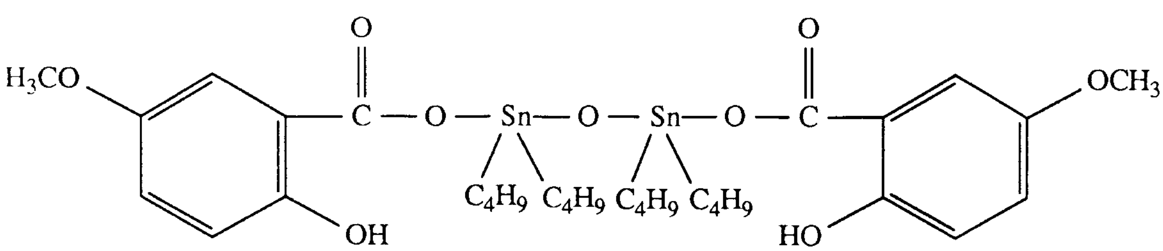

(8)

**Claims for the following Contracting States ES and GR:**

1. A process for preparing anti-tumor compositions, characterized by combining as an active ingredient one or more of the following compounds

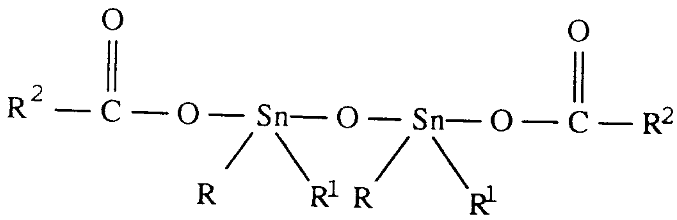

(1)

wherein R and $R^1$ are the same or different and represent $C_1$-$C_8$ alkyl groups,
$R^2$ is a phenyl group which is substituted with one ore more of the following groups: $C_1$-$C_3$ alkyl, $C_1$-$C_3$ alkoxy, hydroxy, halo, amino and acylamino;

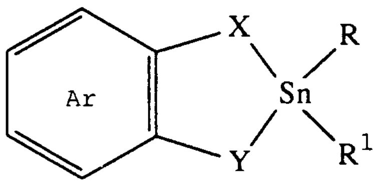

(2)

wherein:
R and $R^1$ are as defined for formula (1),
X and Y are independently -C(O)-O-, -$CH_2$-O-, -O-, -S- or -$CH_2$C(O)-O-,

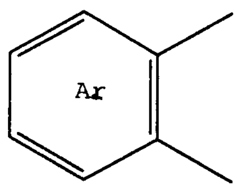

is a phenylene group or a pyridylene group with the N-atom in position 1, optionally substituted with one or more of the following groups: halo, $C_1$-$C_3$ alkyl and $C_1$-$C_3$ alkoxy, with the proviso that when

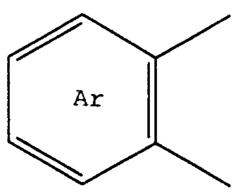

is a phenylene group substituted by two I atoms and one of the groups X and Y is -C(O)-O-, the other is not -O-;

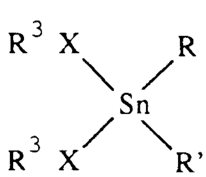

(3)

wherein:

R and $R^1$ are as defined for formula (1),
X is as defined for formula (2),
$R^3$ is a phenyl group, substituted with one or more of the following groups: hydroxy, $C_1$-$C_3$ alkoxy, trifluoromethyl, amino and $C_1$-$C_3$ alkylamino; with a carrier or diluent for said active ingredient.

**2.** A composition according to claim 1, containing a compound having the formula:

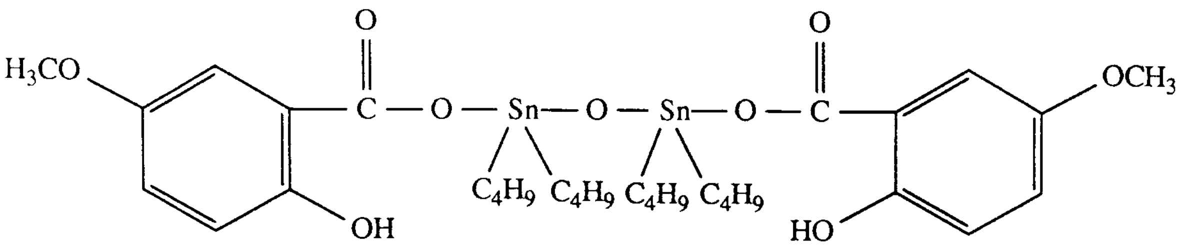

(8)

European Patent Office

# EUROPEAN SEARCH REPORT

Application Number

EP 90 20 2316

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | CHEMICAL ABSTRACTS, vol. 111, no. 25, 18th December 1989, page 809, abstract no. 233024m, Columbus, Ohio, US; M. GIELEN et al.: "Synthesis, characterization and antitumor activity of a series of diorganotin (IV) compounds of the type Bu2Sn (O-X-Y-O)", & BULL. SOC. CHIM. BELG. 1988, 97(11-12), 873-81<br>* Abstract *<br>--- | 1,2 | C 07 F 7/22<br>A 61 K 31/32 |
| X | CHEMICAL ABSTRACTS, vol. 109, no. 23, 5th December 1988, page 676, abstract no. 211155m, Columbus, Ohio, US; M. GIELEN et al.: "Diorganotin (IV) derivatives of 2,6-pyridinedicarboxylic acid: synthesis, spectroscopic characterization, X-ray structure analysis, in vitro and in vivo antitumor activity", & MAIN GROUP MET. CHEM. 1987, 10(3), 147-67 (Eng)<br>* Abstract *<br>--- | 1,2 | TECHNICAL FIELDS SEARCHED (Int. Cl.5) |
| A | TETRAHEDRON, vol. 45, no. 4, 1989, pages 1219-1229, Pergamon Press, plc; M. GIELEN et al.: "Synthesis characterization and antitumour activity of 7,7-di-n-dioxa-6,8-dioxa-7-stanna-spiro (3,5) nonane, a di-n-butyltin (IV) analog of "paraplatin", and of a series of di-n-butyltin (IV) derivatives of mono- and disubstituted malonic acids"<br>* The whole article *<br>--- | 1-3 | C 07 F 7/00<br>A 61 K 31/00 |
| X | EP-A-0 214 842 (SHIONOGI & CO., LTD)<br>* Table 1-1, compound nos. 21,22 *<br>--- -/- | 2 | |

~~The present search report has been drawn up for all claims~~

| Place of search | Date of completion of the search | Examiner |
|---|---|---|
| THE HAGUE | 17-04-1991 | RINKEL L.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

European Patent
Office

## CLAIMS INCURRING FEES

The present European patent application comprised at the time of filing more than ten claims.

- [ ] All claims fees have been paid within the prescribed time limit. The present European search report has been drawn up for all claims.
- [ ] Only part of the claims fees have been paid within the prescribed time limit. The present European search report has been drawn up for the first ten claims and for those claims for which claims fees have been paid,

  namely claims:
- [ ] No claims fees have been paid within the prescribed time limit. The present European search report has been drawn up for the first ten claims.

## X LACK OF UNITY OF INVENTION

The Search Division considers that the present European patent application does not comply with the requirement of unity of invention and relates to several inventions or groups of inventions,
namely:

See sheet -B-

- [ ] All further search fees have been paid within the fixed time limit. The present European search report has been drawn up for all claims.
- [ ] Only part of the further search fees have been paid within the fixed time limit. The present European search report has been drawn up for those parts of the European patent application which relate to the inventions in respect of which search fees have been paid,

  namely claims:
- [X] None of the further search fees has been paid within the fixed time limit. The present European search report has been drawn up for those parts of the European patent application which relate to the invention first mentioned in the claims,

  namely claims: 3 and 1,2(partially)

European Patent Office

# EUROPEAN SEARCH REPORT

Application Number

EP 90 20 2316

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | GB-A-2 077 266 (NEDERLANDSE ORGANISATIE VOOR TOEGEPAST NATUURWETENSCHAPPELIJK ONDERZOEK)<br>* The whole document *<br>----- | 1 | |
| | | | TECHNICAL FIELDS SEARCHED (Int. Cl.5) |

~~The present search report has been drawn up for all claims~~

| Place of search | Date of completion of the search | Examiner |
|---|---|---|
| THE HAGUE | 17-04-1991 | RINKEL L.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

European Patent Office

EP 90 20 2316 -B-

## LACK OF UNITY OF INVENTION

The Search Division considers that the present European patent application does not comply with the requirement of unity of invention and relates to several inventions or groups of inventions, namely:

1. Claims 1 (partially), 2 (partially) and 3:
   Compounds of formula (1) and anti-tumor compositions containing them as an active ingredient.

2. Claims 1 and 2 (both partially):
   Compounds of formula (2) and anti-tumor compositions containing them as an active ingredient.

3. Claims 1 and 2 (both partially):
   Compounds of formula (3) and anti-tumor compositions containing them as an active ingredient.